# DEMANDE DE BREVET EUROPEEN

(11) **EP 4 130 823 A1**
(43) Date de publication de la demande: **08.02.2023**
(21) Numéro de dépôt: 22187727.7
(22) Date de dépôt: 29.07.2022
(51) Int. Cl.: G02B 6/122, G02B 6/125, G02B 6/28, G02B 6/10

(54) **DISPOSITIF POUR COMBINER PLUSIEURS FAISCEAUX LUMINEUX**

(30) Priorité: 05.08.2021 FR 2108518
(71) Demandeur: Commissariat à l'Energie Atomique et aux Energies Alternatives, 75015 Paris (FR); Eclypia, 38028 GRENOBLE (FR)
(72) Inventeur: MONPEURT, Cyrielle, GRENOBLE (FR); COUTARD, Jean-Guillaume, GRENOBLE (FR); LARTIGUE, Olivier, GRENOBLE CEDEX 9 (FR)
(74) Mandataire: Cabinet Camus Lebkiri

(57) **Abrégé**

Dispositif (1) pour combiner plusieurs faisceaux lumineux, le dispositif comprenant plusieurs guides d'onde d'entrée (21, 22, 23) creux, au moins un par faisceau lumineux, ainsi qu'un guide d'onde de sortie (40) creux commun aux différents faisceaux lumineux, chaque guide d'onde d'entrée ayant une ouverture d'entrée (24, 26, 28) pour l'entrée du faisceau lumineux correspondant, et, à l'opposé, une ouverture de sortie (25, 27, 29) par laquelle il débouche dans le guide d'onde de sortie, le guide d'onde de sortie, ainsi que chaque guide d'onde d'entrée étant délimité latéralement par une ou des surfaces métalliques réfléchissantes (46, 47, 48, 49), et dans lequel une portion ( 42) au moins du guide d'onde de sortie (40) est évasée et s'élargit en direction d'une ouverture de sortie (45) du guide d'onde de sortie.

## Description

### DOMAINE TECHNIQUE

Le domaine technique est celui des dispositifs pour combiner ensemble plusieurs faisceaux lumineux afin d'obtenir un même faisceau lumineux global, en particulier dans le domaine de l'infrarouge moyen.

### ARRIERE-PLAN TECHNOLOGIQUE

Combiner plusieurs faisceaux lumineux ensemble revient à les superposer au moins en partie les uns avec les autres, par exemple pour qu'ils éclairent ensemble une même zone donnée (qui peut être une zone à imager, à caractériser, ou à traiter). Pour cela, il faut rapprocher les faisceaux les uns des autres d'un point de vue latéral (i.e. : en termes de position latérale) et, si possible, rapprocher aussi leurs directions de propagation respectives.

Combiner ainsi plusieurs faisceaux permet par exemple d'augmenter la puissance totale avec laquelle on éclaire la zone en question, ou de disposer d'une forme de redondance entre plusieurs sources lumineuses (pour améliorer la fiabilité d'un dispositif). Mais cela permet surtout de combiner des faisceaux lumineux issus de sources ayant des spectres d'émission différents, par exemple des sources lasers ayant des longueurs d'onde d'émission différentes. Le faisceau lumineux global ainsi obtenu couvre alors une large gamme de longueurs d'onde tout en ayant une brillance élevée.

Une telle combinaison de faisceaux est particulièrement utile dans le domaine de l'infrarouge proche et moyen (longueur d'onde dans le vide comprise entre 1 et 15 microns, par exemple). En effet, ce domaine de longueurs d'onde est particulièrement propice à la détection de composés chimiques, avec de nombreuses applications dans le domaine médical, dans le domaine de l'agronomie ou dans celui de la défense et de la sécurité. Plusieurs longueurs d'onde différentes de l'infrarouge moyen permettent ainsi de détecter plusieurs composés différents.

Pour combiner plusieurs faisceaux lumineux, une solution consiste à employer un élément dispersif tel qu'un réseau de diffraction. Mais un tel système, avec propagation libre des faisceaux, est généralement assez encombrant (notamment parce qu'une collimation préalable des faisceaux est nécessaire), et donc peu adapté a priori à un dispositif portatif ou intégré.

Une autre solution consiste à employer des guides d'onde sur silicium fabriqués par des techniques issues de la micro-électronique. Il peut s'agir par exemple de guides en Germanium, avec une gaine en alliage de Silicium et de Germanium. Le guidage de la lumière y est alors réalisé par réflexion totale interne. Dans un tel système, pour combiner plusieurs faisceaux, on peut utiliser un dispositif où plusieurs guides se rejoignent, en général dans une zone qui forme un étranglement (une sorte d'entonnoir), pour se raccorder en entrée d'un guide d'onde de sortie unique, commun aux différents faisceaux. Un tel dispositif a l'avantage de pouvoir être miniaturisé. Mais il n'est pas très intéressant du point de vue des pertes, car environ la moitié de la puissance est perdue à chaque jonction entre deux guides. De plus, les dimensions latérales des guides sont particulièrement petites (généralement de l'ordre de 10 microns au plus) et rendent l'injection dans ces guides difficile car elles nécessitent un alignement très précis des sources par rapport aux guides (précision de l'ordre de 100 nm, selon les trois directions de l'espace, ce qui est très contraignant), d'autant que les sources laser qui émettent dans l'infrarouge moyen sont souvent des sources à base de semi-conducteurs à zone active très petite, pour lesquelles la divergence des faisceaux émis est très grande, en sortie de la source. Pour combiner ces faisceaux, on peut aussi employer un élément dispersif tel qu'un réseau de diffraction, en particulier un réseau de type réseau concave plan (ou CPG pour « Concave Planar Grating » en anglais) réalisé sur le substrat qui support les guides, ou en utilisant un réseau à base de guides d'ondes intégrés du type « Arrayed Wave Guide Grating ». Mais une telle solution n'est utilisable que si les faisceaux ont des longueurs d'onde différentes, et même nettement différentes les unes des autres. Une fois le dispositif réalisé, il est difficile voire impossible de modifier les longueurs d'onde en question. De plus, un tel dispositif nécessite là encore des précisions d'alignement élevées.

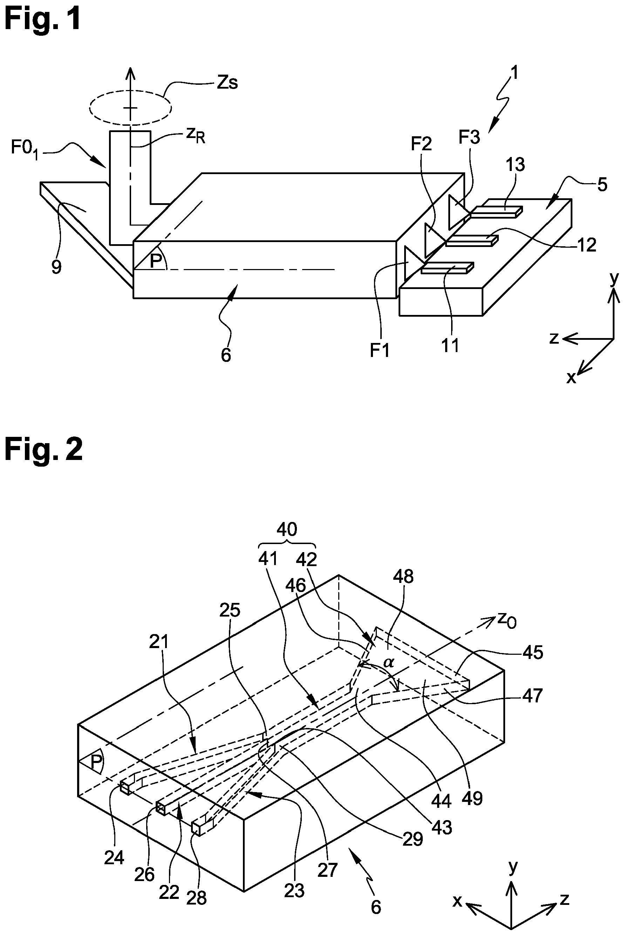

Encore une autre solution pour combiner plusieurs faisceaux lumineux dans le domaine de l'infrarouge moyen, basée sur des guides d'onde métalliques creux fraisés sur la face supérieure d'un bloc d'aluminium, a été proposée dans l'article suivant : « iBEAM : substrate-integrated hollow waveguides for efficient laser beam combining » par Julian Haas et al., Optics Express, vol. 27, no. 16, 2019, pp. 23059-23066. Le bloc d'aluminium en question mesure environ 5 cm par 5 cm de côté, pour 2 cm d'épaisseur. Le dispositif comprend 7 guides d'onde d'entrée, chacun pourvu en entrée d'un connecteur de type F-SMA pour connecter une fibre optique. Ces guides ont chacun une section approximativement carrée de 2 mm de côté. Ils se rejoignent au niveau d'une zone de jonction globalement convergente (voir la figure 1. a de cet article) qui se termine par un guide d'onde de sortie commun aux différents faisceaux lumineux. Le port de sortie de ce dispositif est équipé d'une pièce en forme d'entonnoir, en aluminium poli, qui permet un passage, depuis le guide d'onde de sortie de section carrée de 2 mm de côté, à une fibre optique de sortie ayant un cœur de 0,8 mm de diamètre. Ce dispositif est robuste, et adapté pour combiner, dans une même fibre optique de sortie, plusieurs faisceaux lumineux transportés initialement dans différentes fibres optiques d'entrée.

Mais ce combineur à guides creux, conçu pour fonctionner avec des fibres optiques connectées en entrées et en sortie, délivre en sortie un faisceau lumineux qui n'est généralement pas adapté pour éclairer directement une scène ou un échantillon à caractériser (par exemple une petite partie de la peau d'un individu, une portion d'une feuille d'un végétal ou une partie d'un matériau à analyser). En effet, en sortie de la pièce en forme d'entonnoir mentionnée plus haut, le faisceau lumineux global est de petite section (juste en sortie de l'entonnoir) et probablement fortement divergent. De plus, le passage des fibres optiques aux guides métalliques creux s'accompagne d'une perte de puissance optique (d'environ 6 dB) en sortie du dispositif. Ce dispositif présente d'ailleurs une transmission qui est globalement faible dans l'infrarouge moyen, avec des pertes de 10 dB à la traversée du dispositif, pour chaque faisceau lumineux.

### RESUME

Dans ce contexte, on propose un dispositif pour combiner plusieurs faisceaux lumineux, le dispositif comprenant plusieurs guides d'onde d'entrée creux, au moins un par faisceau lumineux, ainsi qu'un guide d'onde de sortie creux commun aux différents faisceaux lumineux,
- chaque guide d'onde d'entrée ayant une ouverture d'entrée pour l'entrée du faisceau lumineux correspondant, et, à l'opposé, une ouverture de sortie par laquelle il débouche dans le guide d'onde de sortie,
- le guide d'onde de sortie, ainsi que chaque guide d'onde d'entrée étant délimité latéralement par une ou des surfaces métalliques réfléchissantes,
- et dans lequel une portion au moins du guide d'onde de sortie est évasée et s'élargit en direction d'une ouverture de sortie du guide d'onde de sortie.

Autrement formulé, une portion au moins du guide d'onde de sortie, par exemple sa portion terminale, est évasée et s'élargit dans le sens de propagation des faisceaux lumineux.

En pratique, les faisceaux lumineux qui entrent dans le dispositif sont généralement fortement divergents (par exemple parce qu'ils sortent directement de diodes laser). Or, les inventeurs ont constaté que la portion évasée du guide d'onde de sortie, qui s'élargit en direction de la sortie du dispositif (au lieu de se rétrécir), permet de réduire nettement la divergence de ces faisceaux lumineux individuels. Une telle portion évasée a ainsi un effet partiellement comparable à celui d'un miroir convergent. Par ailleurs, il s'avère qu'un tel guide d'onde de sortie, qui s'élargit en direction de la sortie, rapproche les directions de propagation respectives de ces différents faisceaux lumineux à combiner. A titre de comparaison, avec un guide d'onde de sortie à bords parallèles, les différentes réflexions spéculaires sur les bords du guide ne permettent en fait pas de rapprocher les directions de propagation respectives des différents faisceaux lumineux, qui restent alors écartées les unes des autres d'un point de vue angulaire.

Employer un tel guide d'onde de sortie, qui s'élargit dans le sens de propagation des faisceaux lumineux, permet donc d'obtenir en sortie un faisceau lumineux global, regroupant l'ensemble des faisceaux lumineux d'entrée, qui a une divergence d'ensemble réduite. Cette portion évasée permet en outre d'obtenir une puissance par unité de surface élevée, et relativement homogène sur l'ensemble du faisceau.

Le dispositif qui vient d'être présenté peut comprendre aussi un miroir convergent sur lequel se réfléchissent les faisceaux lumineux, une fois sortis du guide d'onde de sortie. Ce miroir convergent réduit encore la divergence du faisceau lumineux global en question.

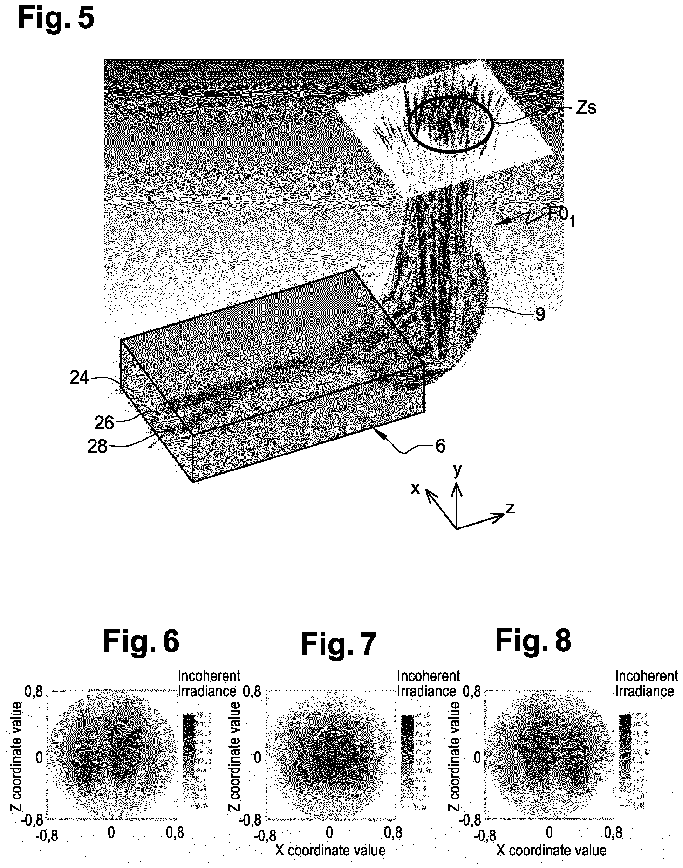

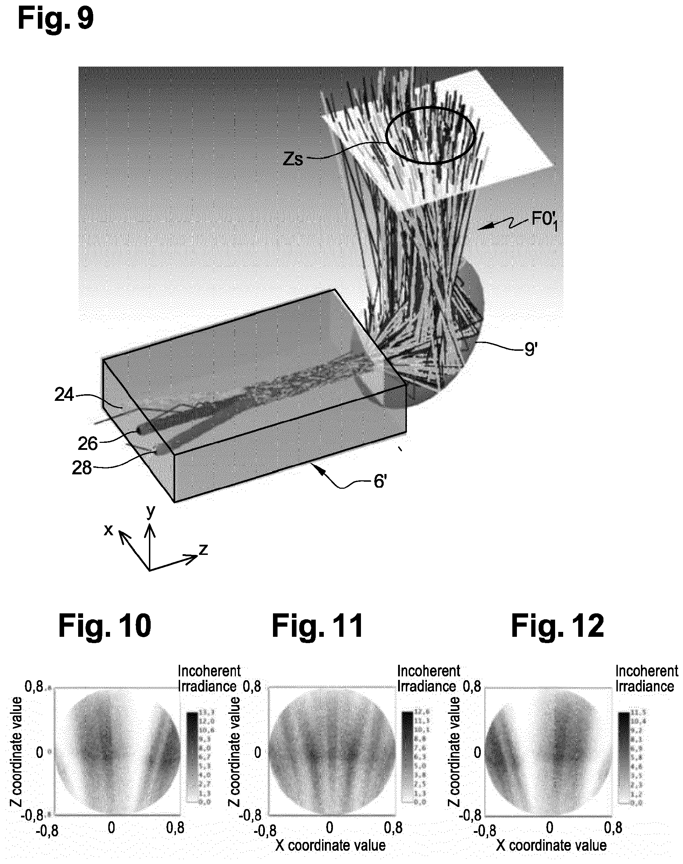

Les inventeurs ont d'ailleurs constaté qu'un tel miroir, *associé au guide d'onde de sortie à partie évasée,* permet de combiner les différents faisceaux lumineux en question en obtenant au final un éclairage intense et homogène d'une zone à éclairer (voir les figures 5 à 8). Pour éclairer un échantillon ou un milieu à caractériser, le faisceau lumineux global produit ainsi s'avère d'ailleurs nettement plus adapté que celui qui serait obtenu avec un miroir convergent mais sans la partie évasée du guide d'onde de sortie (voir les figures 9 à 12), et cela même en optimisant les caractéristiques du miroir convergent en question.

Cette association du miroir convergent et du guide d'onde de sortie à portion évasée permet en particulier d'obtenir une puissance lumineuse par unité surface homogène sur toute une zone à éclairer, en sortie du dispositif, et cela pour chacun des faisceaux lumineux individuels d'entrée (c'est-à-dire en présence de l'un seulement des faisceaux lumineux, puis en présence d'un autre de ces faisceaux seulement, et ainsi de suite). De plus, la puissance lumineuse transportée par l'un ou l'autre de ces faisceaux lumineux est localisée majoritairement à l'intérieur de cette zone à éclairer.

Les caractéristiques du miroir convergent sont en général déterminées en fonction des caractéristiques du guide d'onde de sortie à portion évasée auquel ce miroir est associé (pour obtenir une coopération optimale entre ces deux éléments).

Quoiqu'il en soit, ce dispositif de combinaison, à guide d'onde de sortie à portion évasée, permet une combinaison efficace de plusieurs faisceaux lumineux.

Cet agencement particulier permet par ailleurs d'améliorer la compacité du dispositif : à partir de plusieurs sources différentes, qui peuvent être non collimatées, on obtient directement un faisceau lumineux global, qui combine les faisceaux lumineux d'entrée et qui est semi-collimaté, et cela sans avoir à recourir à d'autres composants optiques.

Il est intéressant de produire un tel faisceau, collimaté, ou tout au moins semi-collimaté, car cela permet d'éclairer un échantillon à caractériser avec des rayons qui ont quasiment tous la même incidence, et donc la même profondeur de pénétration caractéristique dans cet échantillon (en tout cas pour un échantillon homogène). Cela permet ainsi de sonder une épaisseur de l'échantillon (par exemple une épaisseur de tissu biologique) bien contrôlée

De plus, on limite ainsi les pertes optiques que pourrait entraîner un couplage dans une fibre optique de sortie, ou à partir de fibres optiques d'entrée.

On pourra noter d'ailleurs que dans un tel dispositif de combinaison, à guides d'onde métalliques creux, les pertes par injections peuvent être très faibles, et les pertes par courbure éventuelle des guides quasiment absentes (contrairement à des guides en matériau diélectrique). Les réflexions sur les surfaces métalliques qui délimitent les guides peuvent en revanche entraîner des pertes par absorption, pertes qui restent néanmoins modérées puisque de nombreux métaux ont une réflectivité élevée, en particulier dans l'infrarouge. Enfin, un tel dispositif a une tenue au flux élevée, généralement supérieure à celle de guides d'onde en matériaux diélectriques.

Les guides d'onde d'entrée et de sortie peuvent être délimités chacun, latéralement, par une seule surface réfléchissante lorsqu'il s'agit de guides d'onde cylindriques, par exemple. Chaque guide peut aussi être délimité latéralement par plusieurs surfaces réfléchissantes distinctes, lorsque ce guide a une section carrée ou rectangulaire par exemple (auquel cas il est délimité par quatre surfaces latérales réfléchissantes). Dans l'ensemble de ce document, le terme « section » désigne une coupe du guide d'onde considérée, selon un plan de coupe perpendiculaire à l'axe du guide (ou plus généralement, perpendiculaire à une ligne moyenne le long de laquelle s'étend le guide ; en d'autres termes, il s'agit d'une section droite). Quoiqu'il en soit, le terme « section » désigne une coupe du guide d'onde considéré, et non un tronçon de ce guide. Par ailleurs, les guides d'onde d'entrée (ou de sortie), seront désignés indifféremment par l'expression « guide d'onde d'entrée » ou par l'expression « guide d'entrée ».

Outre les caractéristiques mentionnées ci-dessus, le dispositif qui vient d'être présenté peut présenter une ou plusieurs des caractéristiques optionnelles suivantes, considérées individuellement ou selon toutes les combinaisons techniquement envisageables :
- ladite portion évasée a une ouverture angulaire moyenne supérieure à 20 degrés ;
- ladite ouverture angulaire est comprise entre 20 degrés et 100 degrés (ce qui correspond par exemple à plus ou moins 10 degrés, et, respectivement, plus ou moins 50 degrés de part et d'autre d'un axe du guide d'onde de sortie, sur lequel est centré ce guide) ; pour des angles de raccordement des guides d'onde d'entrée sur le guide d'onde sortie compris typiquement entre 10 et 50 degrés, de telles valeurs d'ouverture angulaire s'avèrent bien adaptées pour obtenir en sortie un faisceau lumineux global pseudo-collimaté, dans lequel on aura rapproché les unes des autres les directions de propagation des faisceaux lumineux individuels, initiaux ;

- ladite ouverture angulaire moyenne est l'ouverture angulaire moyenne que présente cette portion évasée dans un plan contenant l'axe du guide d'onde de sortie (ou dans un plan contenant une ligne moyenne le long de laquelle s'étend le guide d'onde de sortie) ;
- ladite ouverture angulaire est égale à l'angle moyen entre deux des surfaces métalliques réfléchissantes, qui délimitent latéralement le guide d'onde de sortie au niveau de ladite portion évasée, ces deux surfaces étant situées respectivement de part et d'autre du guide (ladite moyenne étant une moyenne le long de ladite portion évasée) ;
- ladite ouverture angulaire est égale à l'angle entre deux surfaces métalliques réfléchissantes planes qui délimitent latéralement le guide d'onde de sortie au niveau de ladite portion évasée, ces deux surfaces étant situées respectivement de part et d'autre du guide ;
- l'ouverture de sortie du guide d'onde de sortie a une aire au moins supérieure au double, voire au triple de l'aire d'une section d'entrée de ladite portion évasée ;
- les guides d'onde d'entrée et le guide d'onde de sortie s'étendent parallèlement à un même plan ; autrement formulé, le guide d'onde de sortie et chaque guide d'onde d'entrée s'étend le long d'une ligne moyenne, sur laquelle il est centré, ces différentes lignes moyennes étant situées dans un même plan, ou, tout au moins, s'étendant parallèlement à un plan donné qui est le même pour les différents guides ; le guide d'onde de sortie et les guides d'onde d'entrée peuvent par exemple être centrés respectivement sur différents axes, qui sont chacun parallèles à ce même plan, ou même situés dans ce même plan ;
- le dispositif comprend en outre un miroir de renvoi disposé de manière à réfléchir les faisceaux lumineux qui sortent du guide d'onde de sortie dans une direction moyenne inclinée par rapport audit plan ;
- l'angle entre ladite direction moyenne est ledit plan est compris par exemple entre 40 et 90 degrés ;
- le miroir de renvoi est le miroir convergent lui-même ; en d'autre termes, le miroir de renvoi et le miroir convergent peuvent être un seul et même miroir, à la fois convergent et incliné ;
- le miroir de renvoi est disposé en vis-à-vis de l'ouverture de sortie du guide d'onde de sortie ;
- Le dispositif comprend une embase avec une surface supérieure, et un capot avec une surface inférieure qui est en contact avec la surface supérieure de l'embase, l'embase comprenant sur sa surface supérieure plusieurs rainures, chaque guide d'onde d'entrée étant formé, au moins en partie, par l'une desdites rainures ; autrement formulé, chaque guide d'onde d'entrée est constitué au moins en partie par l'une de ces rainures ;
- l'embase et/ou le capot est une pièce monolithique, d'un seul tenant (cela améliore la stabilité et la compacité du dispositif) ;
- Le dispositif comprend plusieurs sources lumineuses destinées à émettre lesdits faisceaux lumineux, chaque source lumineuse étant positionnée de manière à ce que le faisceau lumineux émis par cette source entre dans l'un des guides d'onde d'entrée du dispositif ;
- lesdites sources sont solidaires des guides d'onde d'entrée ;
- pour au moins certaines desdites sources, le faisceau lumineux émis par la source considérée entre directement dans le guide d'onde d'entrée correspondant, sans composant optique intermédiaire entre la source et l'ouverture d'entrée de ce guide d'onde ;
- pour au moins certaines desdites sources, le dispositif comprend un ou plusieurs composants optiques intermédiaires situés sur le trajet du faisceau lumineux émis par la source considérée, entre cette source et l'ouverture d'entrée du guide d'onde d'entrée correspondant ;
- pour au moins certaines desdites sources, le faisceau lumineux émis par la source considérée a une longueur d'onde moyenne (longueur d'onde dans le vide) comprise entre 1 et 15 microns ;
- le dispositif comprend au moins un miroir d'entrée, pour réfléchir le faisceau lumineux émis par l'une desdites sources vers l'ouverture d'entrée du guide d'onde d'entrée correspondant, une direction normale à ce miroir étant inclinée par rapport audit plan (lorsque le miroir d'entrée n'est pas un miroir plan, ladite direction normale est la direction qui, en moyenne, est perpendiculaire à ce miroir - moyenne sur la portion éclairée du miroir) ;
- au moins certains des guides d'onde d'entrée ont une section dont la largeur ou le diamètre est compris entre 0,1 et 1,5 mm, voire entre 0,1 et 0,7 mm ;
- en entrée des guides d'onde d'entrée, les faisceaux lumineux émis par lesdites sources ont chacun une ouverture angulaire supérieure à 20 degrés, voire supérieure à 40 degrés ;
- après réflexion sur ledit miroir convergent, lesdits faisceaux lumineux sortent du dispositif sans rencontrer d'autre composant optique, à l'exception d'un éventuel filtre plan et/ou d'une éventuelle fenêtre de sortie plane traversée par ces faisceaux lumineux pour sortir du dispositif.

La présente technologie et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif.
La figure 1 représente schématiquement un premier mode de réalisation d'un dispositif de combinaison de faisceaux mettant en œuvre la présente technologie, vu en perspective.
La figure 2 représente schématiquement un combineur de faisceaux du dispositif de la figure 1, vu en perspective et par transparence.
La figure 3 est identique à la figure 2, mais fait apparaître un certain nombre de cotes.
La figure 4 montre plus en détail un miroir de sortie du dispositif de la figure 1, en perspective.
La figure 5 représente schématiquement, en perspective, des rayons lumineux se propageant dans le dispositif de la figure 1, ces rayons étant tracés par simulation numérique.
Les figures 6, 7 et 8, obtenues par simulation numérique, montrent l'irradiance obtenue dans une zone à éclairer donnée, en sortie du dispositif de la figure 1, lorsqu'une première, deuxième, et respectivement troisième source est en fonctionnement, les autres sources étant éteintes.
La figure 9 est similaire à la figure 5, mais dans le cas d'un guide d'onde de sortie sans portion évasée.
Les figures 10, 11 et 12 sont similaires respectivement aux figures 6, 7 et 8 mais, là aussi, dans le cas d'un guide d'onde de sortie sans portion évasée
La figure 13 représente schématiquement un deuxième mode de réalisation d'un dispositif de combinaison de faisceaux mettant en œuvre la présente technologie, vu en perspective.
La figure 14 représente schématiquement un troisième mode de réalisation d'un dispositif de combinaison de faisceaux mettant en œuvre la présente technologie, vu en perspective.

### DESCRIPTION DETAILLEE

Comme déjà indiqué, la présente technologie concerne un dispositif 1 ; 2 ; 3 pour combiner ensemble plusieurs faisceaux lumineux d'entrée, F1, F2 et F3, de manière à obtenir en sortie un même faisceau lumineux, global, de préférence semi-collimaté (voir les figures 1, 13 et 14). Cette combinaison est réalisée à l'aide d'un ensemble de guides d'onde métalliques creux. Cet ensemble comprend des guides d'onde d'entrée 21, 22, 23 (figure 2), un par faisceau lumineux d'entrée F1, F2, F3. Ces guides d'onde d'entrée débouchent chacun dans un même guide d'onde de sortie 40, commun aux différents faisceaux lumineux F1, F2, F3, permettant de les combiner.

De manière remarquable, une portion au moins du guide d'onde de sortie 40 est évasée et s'élargit en direction d'une ouverture de sortie 45 de ce guide. Comme expliqué dans la partie intitulée « résumé », le fait que ce guide d'onde s'élargisse ainsi, dans le sens de propagation des faisceaux lumineux, permet de réduire la divergence du faisceau lumineux global F0₁ ; F0₂ ; F0₃ qui en sort.

Trois modes de réalisation de ce dispositif, qui portent respectivement les numéros de référence 1, 2 et 3, sont représentés respectivement sur les figures 1, 13 et 14.

Dans le premier mode de réalisation, le dispositif 1 comprend un miroir de sortie 9 sur lequel le faisceau lumineux global F0₁ se réfléchit, une fois sorti du système à guides d'onde creux (figures 1, 4 et 5). Ce miroir de sortie 9 est convergent, pour réduire encore la divergence du faisceau F0₁. Il est par ailleurs incliné, de manière à dévier le faisceau lumineux global F0₁ vers une zone à éclairer Zs située hors axe.

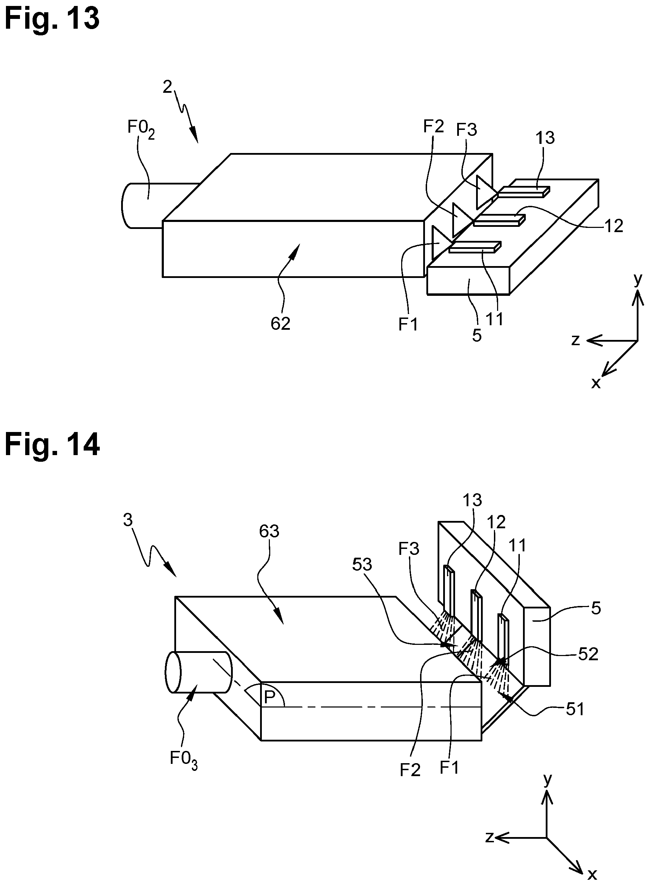

Dans le deuxième mode de réalisation, le dispositif 2 est dépourvu d'un tel miroir de sortie (figure 13).

Dans le troisième mode de réalisation, le dispositif 3 est dépourvu d'un tel miroir de sortie mais comprend en revanche un miroir d'entrée 51, 52, 53 pour chaque faisceau lumineux d'entrée F1, F2, F3 (figure 14). Ces miroirs d'entrée sont inclinés, de manière à diriger ces faisceaux lumineux vers les guides d'onde d'entrée 21, 22, 23, les faisceaux lumineux F1, F2, F3 étant émis initialement avec des directions d'émission inclinées par rapport au plan P dans lequel s'étendent les guides d'onde (figure 14).

Ces trois modes de réalisation présentent toutefois de nombreux points communs (en particulier concernant l'agencement des guides d'onde). Aussi, les éléments identiques ou correspondants seront autant que possible repérés par les mêmes signes de référence, d'un mode de réalisation à l'autre, et ils ne seront pas nécessairement décrits à chaque fois. Ces trois modes de réalisation sont maintenant décrits plus en détail, l'un après l'autre.

### Premier mode de réalisation

Différents aspects du dispositif 1 selon le premier mode de réalisation sont visibles sur les figures 1 à 5. Comme on peut le voir sur ces figures, le dispositif 1 comprend :
- plusieurs sources lumineuses distinctes, 11, 12 et 13, ici au nombre de trois,
- un combineur de faisceaux 6, qui comprend les guides d'onde creux 21, 22, 23, 40 mentionnés plus haut, et qui se présente ici sous la forme d'un bloc globalement parallélépipédique et aplati, et
- le miroir de sortie 9.

Les sources lumineuses 11, 12, 13 sont ici des sources laser de type QCLs (selon l'acronyme anglosaxon de « Quantum Cascade Laser », ou laser à cascade quantique) qui émettent chacune un rayonnement essentiellement monochromatique (i.e. : de spectre très étroit), avec une longueur d'onde d'émission moyenne située entre 1 et 15 microns, voire entre 2 et 12 microns ou même entre 5 et 11 microns. On notera d'ailleurs que le fait que les faisceaux F1 à F3 soient appelés « faisceaux lumineux » ne saurait être interprété comme signifiant que ces faisceaux sont des faisceaux visibles. Ces trois sources ont ici des longueurs d'onde d'émission moyennes respectives I₁, I₂ et I₃ qui sont différentes les unes des autres. En variante, les différentes sources du dispositif pourraient toutefois avoir le même spectre d'émission.

Les faisceaux lumineux F1, F2, F3 qui sortent des sources 11, 12, 13 sont fortement divergents, ici. Chacun de ces faisceaux a par exemple une ouverture angulaire supérieure à 20 degrés (voire supérieure à 40 degrés). Cette ouverture angulaire peut correspondre, comme ici, à la pleine largeur (angulaire) à mi-hauteur du profil d'irradiance du faisceau considéré, dans un premier plan de coupe comprenant l'axe de propagation du faisceau. Dans un deuxième plan de coupe contenant l'axe du faisceau, et perpendiculaire au premier plan de coupe, chacun de ces faisceaux a ici une ouverture angulaire supérieure à 40 degrés. Pour les simulations numériques présentées plus loin, les faisceaux émis, de profil gaussien, ont plus précisément une ouverture angulaire de 30 degrés et de 60 degrés, respectivement dans ce premier et ce deuxième plan de coupe (il s'agit des ouvertures angulaires correspondant au type de QCLs employé ici). En variante, les sources 11, 12, 13 pourraient toutefois être pourvues chacune d'un dispositif de collimation, tel qu'une microlentille, réduisant la divergence du faisceau lumineux émis.

En variante encore, d'autres types de sources laser pourraient être employés, par exemple des sources de type ICL (selon l'acronyme anglosaxon de « Interband Cascade Laser », c'est-à-dire laser à cascade interbandes), d'autre types de diodes laser (avec un montage en cavité externe, ou non), d'autres types de laser à cavité externe ou interne ou encore des lasers accordables. Toutefois, parmi les différentes sources lasers envisageables, les sources à semi-conducteur seront choisies de préférence, pour leur compacité (l'un des objectifs étant d'obtenir un dispositif compact).

Des sources lumineuses incohérentes, par exemple des sources à incandescence telles que des sources à barreau de carbure de silicium, pourraient aussi être employées à la place des sources lasers mentionnées ci-dessus.

Les sources 11, 12, 13 sont disposées les unes à la suite des autres, en ligne, le long d'un axe x. Les faisceaux lumineux F1, F2, F3 sont émis chacun dans une direction qui est parallèle à un même axe z, axe qui, en l'occurrence, est perpendiculaire à l'axe x.

Le dispositif 1 comprend un module de gestion thermique pour évacuer la chaleur dégagée par les sources 11, 12, 13, voire pour réguler leur température. Ce module de gestion thermique comprend ici un bloc 5 en matériau thermiquement conducteur, par exemple en métal, sur lequel sont montées les sources (figure 1). Ce bloc joue à la fois le rôle d'un thermostat (du fait de son inertie thermique) et d'un évacuateur de chaleur. Plus généralement, le module de gestion thermique comprend un thermostat et un dissipateur thermique (ailettes de refroidissement, module à effet Peltier,...). Le module de gestion thermique est ici commun aux différentes sources (ce qui est bien adapté lorsque l'éclairage se fait successivement pour les différentes sources, ou si elles ont un même spectre d'émission). Mais le dispositif pourrait aussi comprendre des modules de gestion thermiques indépendants les uns des autres, avec un module pour chaque source.

Dans ce mode de réalisation, les sources 11, 12, 13 sont solidaires des guides d'onde 21, 22, 23, 40, c'est-à-dire fixes, sans déplacement possible par rapport à ceux-ci. En effet, les sources sont fixées à demeure sur le bloc 5, qui est lui-même solidaire du combineur de faisceaux 6 (soit parce qu'il est fixé au combineur de faisceaux, par exemple collage ou par vissage, soit parce que le bloc 5 est formé par une portion d'une pièce monolithique faisant partie du combineur, cette portion faisant saillie en arrière du combineur).

Comme on peut le voir sur la figure 2, les guides d'onde 21, 22, 23, 40 s'étendent ici parallèlement à un même plan P, et sont même coplanaires. En d'autres termes, chaque guide d'onde s'étend le long d'une ligne moyenne, sur laquelle il est centré, et ces différentes lignes moyennes sont situées dans ce même plan P. Le plan P en question est parallèle au plan contenant les axes x et z mentionnés plus haut (tandis que l'axe y représenté sur les figures est perpendiculaire au plan P).

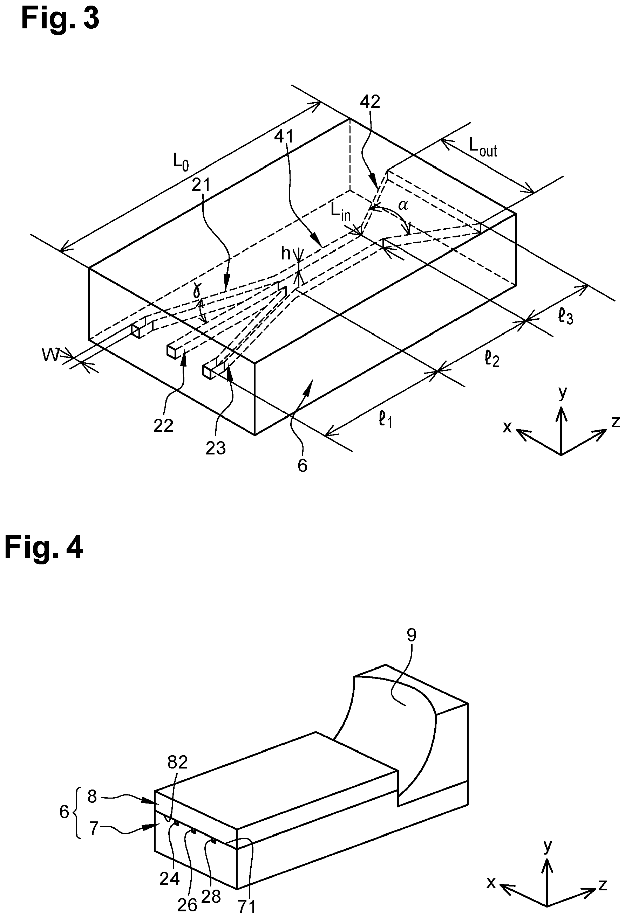

Le combineur de faisceaux 6 peut comprendre comme ici une embase 7 avec une surface supérieure 71 plane (et parallèle au plan P en question). Sur sa surface supérieure, cette embase comprend plusieurs rainures. Chaque guide d'onde 21, 22, 23, 40 est formé, au moins en partie, par l'une de ces rainures. Ces rainures peuvent avoir un profil transverse quelconque, par exemple triangulaire, hémicirculaire, ou, comme ici, rectangulaire (ce qui est commode en termes de fabrication). Le combineur de faisceaux 6 peut comprendre aussi un capot 8 avec une surface inférieure 82, plane, qui vient en contact avec la surface supérieure 71 de l'embase (figure 4). C'est cette surface inférieure 82, métallique et réfléchissante, qui délimite la partie supérieure des guides d'onde (en venant recouvrir les rainures en question, ou, en d'autres termes, en venant obturer l'ouverture supérieure de chaque rainure). Cet agencement permet une fabrication commode de l'ensemble des guides d'onde, que ce soit par gravure de la face supérieure d'un substrat, usinage par enlèvement de matière de type fraisage, ou encore par fabrication additive ou par moulage. L'embase 7 est une pièce monolithique d'un seul tenant (i.e. : avec une continuité de matière sur l'ensemble de la pièce), ainsi que le capot 8, ce qui concourt à la stabilité et compacité du dispositif.

Le combineur de faisceaux 6, globalement parallélépipédique, est de petites dimensions. Sa largeur et sa longueur sont par exemple inférieures à 20 ou même 10 mm, tandis que son épaisseur est par exemple inférieure à 5 mm ou même à 3 mm.

Qu'il soit formé par cette embase et capot, ou différemment, le combineur de faisceaux 6 comprend ici un substrat dans lequel s'inscrivent les guides d'onde 21, 22, 23, 40. Ce substrat peut être formé d'un matériau semi-conducteur, tel que du silicium par exemple, ou en verre, les surfaces qui délimitent latéralement les guides étant alors recouvertes d'une couche métallique, après avoir éventuellement été polies. Cette couche métallique a une réflectivité élevée sur l'ensemble de la gamme spectrale d'utilisation, par exemple supérieure à 95% ou même à 98%. Ce métal peut par exemple être de l'aluminium ou de l'or, qui ont chacun une réflectivité élevée dans le domaine de l'infrarouge moyen. Le substrat en question peut aussi être en métal, ce qui permet de s'affranchir d'une étape de métallisation des surfaces en question. On pourra noter que, dans l'infrarouge moyen, une rugosité de surface de l'ordre de quelques centaines de nanomètres suffit largement pour obtenir une réflexion spéculaire de qualité, et qu'une telle rugosité est compatible, de manière standard, avec les techniques de fabrication mentionnées ci-dessus.

On notera que, dans le cas d'un substrat en semi-conducteur, l'ensemble de guides creux pourrait être réalisé par des procédés standards de la micro-électronique (gravure, collage, métallisation), ce substrat servant aussi de support aux sources lumineuses (les sources étant alors des sources à base de semi-conducteur). De cette manière, l'alignement (et le packaging) des différents éléments serait facilité.

Quelle que soit la nature du substrat dans lequel s'inscrivent les guides d'onde 21, 22, 23, 40, chaque guide d'onde est entièrement délimité latéralement par une ou des surfaces métalliques réfléchissantes. Ainsi, pour un guide d'onde de section circulaire, par exemple, le guide est délimité latéralement par une surface cylindrique entièrement métallique. Pour des guides d'onde ayant une section droite qui est rectangulaire, tels que ceux représentés sur la figure 2, chaque guide, ou, tout au moins, chaque tronçon du guide est délimité latéralement par quatre surfaces métalliques réfléchissantes.

Comme déjà indiqué, les guides d'onde 21, 22, 23, 40 sont creux. Le volume intérieur de ces différents guides peut être rempli d'air. Il peut aussi être rempli d'air dépourvu de vapeur d'eau, ou d'azote pur, ou encore mis sous vide, pour s'affranchir de l'absorption marquée causée par la vapeur d'eau et le dioxyde de carbone à certaines longueurs d'onde de l'infrarouge moyen.

La structure géométrique de l'ensemble de guides d'onde 21, 22, 23, 40 est maintenant décrite plus en détail.

Chaque guide d'onde d'entrée 21, 22, 23 s'étend depuis son ouverture d'entrée 24, 26, 28 jusqu'à une ouverture de sortie 25, 27, 29 par laquelle il débouche dans le guide d'onde de sortie 40 (figure 2).

Le guide d'onde d'entrée 22 est rectiligne, et parallèle à l'axe z d'émission des faisceaux lumineux F1, F2, F3. Les deux guides d'onde d'entrée 21 et 23 situés de part et d'autre de celui-ci sont rectilignes par morceaux, avec, pour chacun, un tronçon d'entrée court, parallèle à l'axe z, et un tronçon principal, rectiligne, incliné par rapport à l'axe z de manière à rapprocher progressivement ce guide des autres guides d'onde d'entrée. En variante, au lieu d'être rectilignes par morceaux, ces guides pourraient toutefois être courbes (c'est-à-dire s'étendre le long de lignes moyennes courbes). Les guides d'onde d'entrée 21, 22, 23 ont chacun une section, en l'occurrence rectangulaire, qui reste la même tout au long de ce guide, sans s'élargir ni rétrécir.

Dans ce premier mode de réalisation, chaque ouverture d'entrée 24, 26, 28 est située en vis-à-vis, c'est-à-dire en face de l'une des sources 11, 12, 13 du dispositif 1. La distance entre la source 11, 12, 13 considérée et l'ouverture d'entrée correspondante, 24, 26 ou 28, est réduite, de manière à injecter l'essentiel du faisceau émis F1, F2, F3 dans le guide malgré la forte divergence de ce faisceau. Cette distance est par exemple supérieure à 20 microns (pour la commodité de fabrication), mais inférieure à la moitié de la largeur w ou du diamètre de l'ouverture d'entrée 24, 26, 28.

En termes de dimensions latérales, les guides d'onde d'entrée 21, 22, 23 ont :
- une hauteur h (extension selon une direction perpendiculaire au plan P) qui est la même pour ces différents guides, et qui est d'ailleurs égale à la hauteur h du guide d'onde de sortie 40 (figure 3), et
- une même largeur w.

La hauteur h et la largeur w sont supérieures 0,1 mm. Cela rend l'alignement des sources et des guides d'onde d'entrée relativement aisé, et permet une injection avec peu de pertes. Le fait d'employer des guides d'onde pas trop étroits permet aussi de limiter le nombre de réflexions métalliques sur les bords du guide, ce qui permet de réduire les pertes par absorption sur les surfaces métalliques qui délimitent le guide. Par ailleurs, la hauteur h et la largeur w sont inférieures à 1,5 mm, et même inférieures à 0,7 mm, ici, de manière à limiter l'encombrement total du dispositif 1.

Pour ce qui est du guide d'onde de sortie 40, il s'étend depuis une première extrémité 43 jusqu'à son ouverture de sortie 45.

Les guides d'onde d'entrée 21, 22, 23 se raccordent au guide d'onde de sortie 40 au niveau de sa première extrémité 43. A sa première extrémité 43, le guide d'onde de sortie a d'ailleurs une largeur proche de trois fois la largeur w de l'un quelconque des guides d'entrée.

Le guide d'onde de sortie 40 est centré sur un axe zo, en l'occurrence parallèle à l'axe z. Le guide d'onde d'entrée 22 est aligné avec l'axe zo du guide d'onde de sortie 40. Les deux guides d'onde d'entrée 21 et 23 se raccordent quant à eux au guide d'onde de sortie 40 en formant un angle γ avec l'axe zo de ce guide. L'angle de jonction y est compris de préférence entre 10 et 50 degrés (y compris lorsque le nombre de guides d'entrée est différent de celui employé ici).

Comme on peut le voir sur la figure 2, le guide d'onde de sortie 40 comprend une portion de jonction, 41, suivie d'une portion évasée 42.

La portion de jonction 41 s'étend depuis la première extrémité 43 du guide d'onde de sortie, jusqu'à une section d'entrée 44 de la portion évasée 42 (cette section d'entrée est la section du guide 40 à partir de laquelle il s'élargit). La portion de jonction 41 a une section qui reste la même tout au long de la portion de jonction 41 (section qui, en l'occurrence, est rectangulaire).

La portion évasée 42 s'étend depuis sa section d'entrée 44 jusqu'à l'ouverture de sortie 45 du guide d'onde de sortie. Elle a ici une section rectangulaire, qui s'élargit tout au long de cette portion 42 du guide de sortie. Cette portion évasée est ainsi délimitée par quatre surfaces planes 46, 47, 48, 49 qui forment ensemble un cornet qui s'élargit en direction de la sortie du guide.

En l'occurrence, les surfaces supérieure et inférieure 48, 49 de ce cornet sont parallèles entre elles, et parallèles au plan P. Ses deux surfaces latérales 46 et 47 sont en revanche inclinées l'une par rapport à l'autre. Elles forment entre elles un angle d'ouverture a. Cet angle d'ouverture est ici supérieur à 20 degrés, et même à 50 degrés, et inférieur à 100 degrés. Pour des angles de raccordement des guides d'onde d'entrée 21, 22, 23 sur le guide d'onde sortie 40 compris typiquement entre 10 et 50 degrés, de telles valeurs d'ouverture angulaire s'avèrent bien adaptées pour obtenir en sortie un faisceau lumineux global F0₁ dans lequel on aura rapproché les unes des autres les directions de propagation moyennes des faisceaux lumineux individuels, initiaux F1, F2, F3.

Ici, la portion évasée 42 est donc divergente seulement dans un plan. Ce plan, dans lequel le guide d'onde de sortie 40 est ouvert angulairement, est le même que le plan contenant les guides d'onde d'entrée, écartés angulairement les uns des autres (il s'agit du plan P mentionné précédemment), justement pour que l'ouverture angulaire du guide de sortie permette de rapprocher les directions de propagation des faisceaux, injectés dans ce guide par les guides d'entrée.

En termes de section, l'ouverture de sortie 45 du guide de sortie a une aire au moins supérieure au double, voire au triple de l'aire de la section d'entrée 44 de la portion partie évasée 42 du guide de sortie. Cette augmentation de surface permet de réduire de manière substantielle la divergence du faisceau lumineux global F0₁ qui sort du combineur de faisceaux 6.

Plusieurs variantes peuvent être apportées au guide d'onde de sortie 40 qui vient d'être présenté.

Ainsi, la portion de jonction 41, non divergente, pourrait par exemple être omise. Des résultats de simulation numérique montrent en effet qu'une combinaison satisfaisante peut être obtenue sans cette portion de jonction (quitte à modifier les dimensions ou l'ouverture angulaire du guide de sortie), notamment en termes de divergence du faisceau lumineux global de sortie et d'homogénéité de la puissance lumineuse dans celui-ci.

La portion de jonction 41 pourrait aussi être légèrement divergente (mais moins que la partie évasée 42), pour favoriser une propagation des faisceaux en direction de la sortie du dispositif.

Au lieu de comprendre une portion non-divergente, suivie d'une portion divergente ayant un angle d'ouverture constant, le guide d'onde de sortie pourrait avoir une ouverture angulaire qui varie progressivement, continûment tout au long de ce guide (cette ouverture angulaire augmentant par exemple progressivement le long de ce guide). Dans ce cas, le guide d'onde de sortie aurait alors une ouverture angulaire moyenne (moyenne le long de la portion évasée, depuis sa section d'entrée jusqu'à l'ouverture de sortie) supérieure à 20 degrés, ou même à 40 degrés.

D'autre part, au lieu d'être divergente selon une seule des deux directions transverses perpendiculaires à l'axe zo du guide (en l'occurrence selon la direction x), la portion évasée 42 pourrait être divergente selon ces deux directions transverses (x et y). La portion évasée pourrait alors avoir une forme de cône, ou une forme de cornet à quatre faces telle que présentée ci-dessus mais avec alors des surfaces supérieure et inférieure 48 et 49 inclinées elles aussi l'une par rapport à l'autre (au lieu d'être parallèles).

Par ailleurs, le dispositif pourrait comprendre un nombre de guides d'onde d'entrée différent de ce qui a été présenté ci-dessus (par exemple quatre ou cinq guides d'entrée, au lieu de trois).

S'agissant maintenant du miroir de sortie 9, comme déjà indiqué, il est incliné de manière à dévier le faisceau lumineux global F0₁ qui sort de l'ouverture de sortie 45, vers une zone à éclairer Zs située hors axe.

En l'occurrence, le miroir de sortie 9 est incliné de manière à ce que le faisceau lumineux global F0₁ ait une direction de propagation moyenne z_{R}, après réflexion sur le miroir de sortie 9, qui soit perpendiculaire, ou quasiment perpendiculaire au plan P. Cela permet d'éclairer la zone Zs, située hors axe.

Pouvoir éclairer une telle zone est intéressant en pratique pour le dispositif 1, qui est miniaturisé et portatif. En effet, le combineur de faisceau 6, globalement plan et qui reste l'un des éléments les plus encombrants du dispositif, peut alors être positionné parallèlement à la surface d'un élément à caractériser, tel que la peau d'un individu ou un bloc de matériau à analyser, le miroir de sortie renvoyant alors le faisceau lumineux global vers cette surface à analyser (avec un éclairage globalement en incidence normale).

La zone à éclairer Zs correspond ici à un disque, dont le diamètre est compris entre 1 et 10 mm, parallèle au plan P.

Comme déjà indiqué, le miroir de sortie 9 est convergent, pour réduire la divergence du faisceau lumineux global F0₁. Le caractère convergent de ce miroir permet notamment d'augmenter la puissance lumineuse totale reçue dans la zone à éclairer Zs.

A titre d'exemple, le miroir de sortie 9 peut être un miroir parabolique employé hors axe (c'est-à-dire dont la surface réfléchissante est formée d'une portion de paraboloïde de révolution).

Le miroir de sortie pourrait aussi être un miroir de type parabolique, mais avec des sections paraboliques et des foyers différents dans un plan de coupe parallèle au plan y,z, et dans un plan de coupe parallèle au plan x,z. Le miroir de sortie pourrait aussi être un miroir de type toroïdal (section circulaire, mais avec des rayons de courbure différents dans le plan des sources, x,z, et dans le plan y,z). Le miroir de sortie pourrait aussi avoir une surface réfléchissante concave de forme arbitraire (miroir « freeform »), optimisée pour éclairer essentiellement la zone Zs, et de manière homogène.

Quoiqu'il en soit, le caractère plus ou moins convergent du miroir de sortie 9 (sa distance focale, par exemple), et la position de ce miroir sont déterminés de manière à optimiser la puissance reçue dans la zone Zs et/ou l'homogénéité avec laquelle cette puissance est répartie dans la zone Zs (et cela éventuellement faisceau par faisceau, lorsque les sources ont des spectres d'émission différents) et/ou le caractère collimaté du faisceau lumineux global F0₁.

Les caractéristiques du miroir de sortie seront en général choisies en fonction de celles du guide d'onde de sortie 40, évasé, puisque les caractéristiques de la portion évasée de ce guide ont une influence importante sur les propriétés du faisceau lumineux global qui sort du guide. A titre d'exemple, pour un guide très évasé, le foyer du miroir de sortie pourra être choisi plus proche de la section d'entrée 44 que de l'ouverture de sortie 45 du guide d'onde, et inversement pour un guide peu évasé, toutes choses égales par ailleurs.

Des valeurs bien adaptées pour la courbure du miroir de sortie 9, pour sa position, ainsi que pour les caractéristiques géométriques des guides d'onde (angle d'ouverture, longueur de chaque portion, etc...) peuvent être déterminées, par simulation numérique, par exemple en tracé de rayons, de manière à optimiser un ou plusieurs des critères mentionnés ci-dessus.

Un exemple de résultat d'une telle simulation est présenté sur les figures 5 à 8.

Dans cet exemple, les paramètres fixes étaient : la hauteur h des guides d'onde (0,2 mm), la largeur w des guides d'onde d'entrée (0,18 mm), l'espacement entre les sources (0,86 mm), et la longueur totale Lo du combineur de faisceaux (environ 6 mm). La zone Zs à éclairer a quant à elle un diamètre de 1,6 mm et est située à 6 mm au-dessus du plan des sources (selon l'axe y).

Les paramètres libres (ajustables) comprenaient : la longueur I₃ et la largeur Lout de la portion évasée du guide d'onde de sortie, la longueur I2 de la portion de jonction 41, la longueur selon l'axe z des guides d'entrée, I1, et la position et focale du miroir de sortie 9.

Les paramètres libres ont alors été ajustés en réalisant des simulations numériques (au moyen du logiciel de simulation optique Zemax OpticStudio), de manière à optimiser la puissance totale reçue dans la zone Zs ainsi que l'homogénéité avec laquelle cette puissance est répartie dans la zone Zs et cela faisceau par faisceau (c'est-à-dire avec seulement le faisceau F1 présent en entrée, puis avec seulement le faisceau F2 présent en entrée, puis avec seulement le faisceau F3 présent en entrée).

Les résultats représentés sur les figures 5 à 8 sont ceux obtenus au terme de cette procédure d'optimisation. Pour cet exemple, cette procédure d'optimisation a conduit aux valeurs suivantes : angle de raccordement y de 17 degrés environ, angle d'ouverture α de 60 degrés environ (la largeur Lout de l'ouverture de sortie 45 étant quant à elle égale à environ 4,4 fois la largeur Lin de la section d'entrée 44), rapport I2/Lo de 1/3 environ, rayon de courbure du miroir de sortie de 3 mm environ, le miroir ayant un diamètre de 4 mm et étant incliné de 45 degrés par rapport au plan P.

La figure 5, qui montre une partie des rayons lumineux tracés lors de cette simulation, illustre que la plupart des rayons émis contribuent effectivement à l'éclairage de la zone Zs, peu de rayons passant hors de cette zone. Plus précisément, pour les trois sources lumineuses 11, 12 et 13, la puissance lumineuse totale reçue dans la zone Zs est respectivement de 45% (pour la source 11), 57 % et 42% de la puissance lumineuse émise initialement par la source considérée. La légère différence d'efficacité énergétique entre la voie de la source 11 et celle de la source 13 (alors que ces deux voies sont symétriques l'une de l'autre) s'explique par une absorption légèrement plus forte du métal utilisé (en l'occurrence de l'or) à la longueur d'onde I3 (d'environ 9 microns), par rapport à la longueur d'onde I1 (d'environ 6 microns).

La figure 6 montre, en niveaux de gris, l'irradiance obtenue en différents points de la zone Zs lorsque seule la source 11 est en fonctionnement (les sources 12 et 13 étant éteintes). Les coordonnées x et z qui repèrent le point considéré à l'intérieur de cette zone, sont exprimées en mm, sur cette figure. La figure 7 et la figure 8 sont identiques à la figure 6, mais correspondent respectivement au cas où seule la source 12 est en fonctionnement, et au cas où seule la source 13 est en fonctionnement. Comme on peut le voir sur ces figures, la puissance lumineuse est effectivement répartie de manière homogène à l'intérieur de la zone Zs à éclairer, et cela pour chaque source. Comme on peut le voir sur les figures 10 à 12, il en serait bien autrement sans la portion évasée du guide d'onde de sortie.

Les figures 9 à 12 montrent les résultats d'une simulation numérique réalisée dans les mêmes conditions que pour les figures 5 à 8, mais sans portion évasée en sortie du guide d'onde de sortie. Le combineur de faisceau 6' comprend alors les trois guides d'onde d'entrée mentionnés plus haut, et un guide d'onde de sortie de section constante. Comme précédemment, les caractéristiques du miroir de sortie 9' (ainsi qu'une partie des caractéristiques géométriques des guides) ont été ajustées de manière à optimiser la puissance totale reçue dans la zone Zs ainsi que l'homogénéité avec laquelle cette puissance est répartie dans la zone Zs, et cela faisceau par faisceau.

Mais comme on peut le voir sur la figure 10, la figure 11 et la figure 12, même avec cette procédure d'optimisation, on obtient alors un éclairage peu homogène de la zone Zs, notamment pour la lumière provenant de la source 11, ou 13.

On constate par ailleurs sur la figure 9 qu'une proportion importante des rayons lumineux émis passent alors en dehors de la zone Zs (malgré le miroir de sortie 9', convergent) et ne participent pas à son éclairage. D'ailleurs, pour les trois sources lumineuses 11, 12 et 13, la puissance lumineuse totale reçue dans la zone Zs est alors respectivement de 18% (pour la source 11), 23 % et 16% de la puissance lumineuse émise initialement par la source considérée.

Ces résultats illustrent l'intérêt, pour un tel dispositif de combinaison de faisceaux, d'employer un guide d'onde de sortie qui s'élargit dans le sens de propagation des faisceaux (au lieu de se rétrécir ou garder une section constante), lorsque l'on cherche à produire en sortie un faisceau lumineux global pseudo-collimaté et/ou avec une densité de puissance lumineuse élevée et homogène.

### Deuxième mode de réalisation

Le dispositif 2 du deuxième mode de réalisation, représenté sur la figure 13, est identique au dispositif 1 du premier mode de réalisation, mais il est dépourvu du miroir de sortie présenté plus haut.

Son combineur de faisceaux 62 a la même structure que le combineur 6 du premier mode de réalisation. Certaines caractéristiques dimensionnelles du dispositif 2, comme la longueur et l'ouverture angulaire de la portion évasée 42 du guide d'onde de sortie 40, peuvent toutefois avoir des valeurs différentes, par rapport au premier mode de réalisation, de manière à obtenir un faisceau lumineux global F0₂ aussi homogène et collimaté que possible malgré l'absence de miroir convergent en sortie.

D'ailleurs, comme précédemment, certaines caractéristiques dimensionnelles du dispositif 2 peuvent être ajustées par simulation numérique, de manière à optimiser la puissance totale reçue dans une zone à éclairer donnée, et/ou l'homogénéité avec laquelle cette puissance est répartie dans cette zone, pour ce dispositif sans miroir de sortie.

### Troisième mode de réalisation

Le dispositif 3 du troisième mode de réalisation est identique au dispositif du premier mode de réalisation, mais il est dépourvu de miroir de sortie (qu'il s'agisse d'un miroir convergent, ou simplement d'un miroir plan incliné). En revanche, il comprend un miroir d'entrée 51, 52, 53 pour chaque faisceau lumineux d'entrée F1, F2, F3 (figure 14), afin de diriger ces faisceaux lumineux vers les guides d'onde d'entrée 21, 22, 23. En effet, dans ce mode de réalisation, les sources 11, 12, 13 ont des directions d'émission inclinées par rapport au plan P dans lequel s'étendent les guides d'onde, et même perpendiculaires à ce plan.

Ces miroirs d'entrée inclinés, 51, 52, 53, permettent de disposer ainsi les sources 11, 12, 13, avec leurs directions d'émission hors plan. Cela apporte une souplesse supplémentaire dans la configuration d'ensemble du dispositif 3, et peut en particulier faciliter l'installation du système de refroidissement et/ou de thermalisation des sources.

Dans la présente configuration, où les sources 11, 12, 13 sont assez éloignées des ouvertures d'entrée des guides d'onde d'entrée, il peut être intéressant d'employer des sources munies chacune d'un système de collimation (objectif de collimation, microlentille...), pour réduire la divergence des faisceaux lumineux F1, F2, F3 qui en sortent. Cela permet alors de conserver des dimensions assez petites pour les ouvertures d'entrée des guides (inférieures à 1,5 mm, par exemple, pour conserver un dispositif 3 compact), tout en injectant l'essentiel de chaque faisceau F1, F2, F3 dans le guide d'entrée correspondant. En variante ou en complément, on pourrait d'ailleurs employer des miroirs d'entrée 51, 52, 53 à la fois inclinés et convergents, au lieu de munir les sources de systèmes de collimation.

En variante encore, au lieu de comprendre plusieurs miroirs d'entrée distincts, un par source, le dispositif pourrait comprendre un seul miroir d'entrée, d'un seul tenant, commun aux différentes sources.

Quoiqu'il en soit, le combineur de faisceaux 63 de ce dispositif 3 a la même structure que le combineur 6 du premier mode de réalisation. Mais là aussi, certaines caractéristiques dimensionnelles du dispositif 3, comme la longueur et l'ouverture angulaire de la portion évasée 42 du guide d'onde de sortie 40, peuvent avoir des valeurs différentes, par rapport au premier mode de réalisation, de manière à obtenir un faisceau lumineux global F0₃ aussi homogène et collimaté que possible, malgré l'absence de miroir convergent en sortie, et compte tenu de la divergence éventuellement différentes des faisceaux lumineux individuels, F1, F2, F3, qui entrent dans le dispositif 3. Comme précédemment, certaines caractéristiques dimensionnelles du dispositif 3 peuvent être ajustées par simulation numérique, de manière à optimiser la puissance totale reçue dans une zone à éclairer donnée, et/ou l'homogénéité avec laquelle cette puissance est répartie dans cette zone.

Différentes variantes peuvent être apportées aux modes de réalisation qui viennent d'être présentées, en plus de celles déjà mentionnées. A titre d'exemple, le dispositif pourrait comprendre à la fois un miroir de sortie, tel que décrit plus haut, et un ou des miroirs d'entrée. Par ailleurs, les sources pourraient émettre dans d'autres gammes de longueurs d'onde que celle mentionnée plus haut, par exemple dans le domaine du visible.

## Revendications

1. Dispositif (1 ; 2 ; 3) pour combiner plusieurs faisceaux lumineux (F1, F2, F3), le dispositif comprenant plusieurs guides d'onde d'entrée (21, 22, 23) creux, au moins un par faisceau lumineux, ainsi qu'un guide d'onde de sortie (40) creux commun aux différents faisceaux lumineux (F1, F2, F3),
- chaque guide d'onde d'entrée (21, 22, 23) ayant une ouverture d'entrée (24, 26, 28) pour l'entrée du faisceau lumineux (F1, F2, F3) correspondant, et, à l'opposé, une ouverture de sortie (25, 27, 29) par laquelle il débouche dans le guide d'onde de sortie (40),
- le guide d'onde de sortie (40), ainsi que chaque guide d'onde d'entrée (21, 22, 23) étant délimité latéralement par une ou des surfaces métalliques réfléchissantes (46, 47, 48, 49),
- **caractérisé en ce qu'**une portion (42) au moins du guide d'onde de sortie (40) est évasée et s'élargit en direction d'une ouverture de sortie (45) du guide d'onde de sortie (40).

2. Dispositif (1) selon la revendication précédente, comprenant en outre un miroir convergent (9) sur lequel se réfléchissent lesdits faisceaux lumineux (F1, F2, F3), une fois sortis du guide d'onde de sortie (40).

3. Dispositif (1 ; 2 ; 3) selon l'une des revendications précédentes, dans lequel ladite portion évasée (42) a une ouverture angulaire (a) moyenne supérieure à 20 degrés.

4. Dispositif (1 ; 2 ; 3) selon l'une des revendications précédentes, dans lequel l'ouverture de sortie (45) du guide d'onde de sortie (40) a une aire au moins supérieure au double, voire au triple de l'aire d'une section d'entrée (44) de ladite portion évasée (42).

5. Dispositif (1 ; 2 ; 3) selon l'une des revendications précédentes dans lequel les guides d'onde d'entrée (21, 22, 23) et le guide d'onde de sortie (40) s'étendent parallèlement à un même plan (P).

6. Dispositif (1) selon la revendication 5, comprenant en outre un miroir de renvoi (9) disposé de manière à réfléchir les faisceaux lumineux qui sortent du guide d'onde de sortie (40) dans une direction moyenne (z_{R}) inclinée par rapport audit plan (P).

7. Dispositif (1 ; 2 ; 3) selon l'une des revendications 5 ou 6, comprenant une embase (7) avec une surface supérieure (71), et un capot (8) avec une surface inférieure (82) qui est en contact avec la surface supérieure (71) de l'embase, l'embase (7) comprenant sur sa surface supérieure (71) plusieurs rainures, chaque guide d'onde d'entrée (21, 22, 23) étant formé, au moins en partie, par l'une desdites rainures.

8. Dispositif (1 ; 2 ; 3) selon l'une des revendications précédentes, comprenant plusieurs sources lumineuses (11, 12, 13) destinées à émettre lesdits faisceau lumineux (F1, F2, F3), chaque source lumineuse étant positionnée de manière à ce que le faisceau lumineux (F1, F2, F3) émis par cette source (11, 12, 13) entre dans l'un des guides d'onde d'entrée (21, 22, 23) du dispositif, et dans lequel lesdites sources (11, 12, 13) sont solidaires des guides d'onde d'entrée (21, 22, 23).

9. Dispositif (3) selon la revendication 8 prise dans la dépendance de l'une des revendications 5 à 7, comprenant au moins un miroir d'entrée (51, 52, 53), pour réfléchir le faisceau lumineux (F1, F2, F3) émis par l'une desdites sources (11, 12, 13) vers l'ouverture d'entrée (24, 26, 28) du guide d'onde d'entrée (21, 22, 23) correspondant, une direction normale à ce miroir (51, 52, 53) étant inclinée par rapport audit plan (P).

10. Dispositif (1 ; 2 ; 3) selon l'une des revendications précédentes, dans lequel au moins certains des guides d'onde d'entrée (21, 22, 23) ont une section dont la largeur (w) ou le diamètre est compris entre 0,1 et 1,5 mm, voire entre 0,1 et 0,7 mm.
